(19) Europäisches Patentamt

European Patent Office

Office européen des brevets

(11) EP 1 022 446 A1

(12) **EUROPEAN PATENT APPLICATION**
published in accordance with Art. 158(3) EPC

(43) Date of publication:
26.07.2000 Bulletin 2000/30

(51) Int. Cl.$^7$: F02B 53/00

(86) International application number:
PCT/JP98/03118

(21) Application number: 98931060.2

(22) Date of filing: 13.07.1998

(87) International publication number:
WO 00/03132 (20.01.2000 Gazette 2000/03)

(84) Designated Contracting States:
AT BE CH DE DK FR GB GR IT LI SE

(71) Applicant: Saito & Co. Ltd.
Yachiyo-shi, Chiba 276-0032 (JP)

(72) Inventor: SAITO, Hiroshi
Yachiyo-shi Chiba 276-0032 (JP)

(74) Representative:
Grill, Matthias, Dipl.-Ing.
Patentanwälte
Tiedtke-Bühling-Kinne & Partner
Bavariaring 4
80336 München (DE)

(54) **SUPEREXPANSIVE ROTARY ENGINE**

(57) A rotary engine is disclosed having a rotor and rotor housing. The rotor rotates within an inner wall of the rotor housing. A gap between the rotor and the inner wall of the rotor housing defines an engine compartment. A plurality of telescopic sealing blades are attached substantially equally spaced on the circumference of said rotor so that the sealing blades elastically contact to the inner wall of the rotor housing. The plurality of telescopic sealing blades slide along the inner wall of the rotor housing. The sealing blades separate the engine chamber in an airtight manner so that the suction of fuel gas, its succeeding compression and the exhaust of burnt gas are carried out. The engine has a compression chamber and an expansion chamber, defined by two adjacent sealing blades, respectively. In an overexpansion rotary engine, a volume of the expansion chamber is greater than a volume of the compression chamber.

FIG. 1

**Description**

FIELD OF THE INVENTION

This invention relates to an internal combustion engine which can provide a high engine torque output even at a lower engine rotation state, and in particular to an overexpansion rotary engine, wherein a maximum volume of the expansion chamber is greater than a maximum volume of the compression chamber.

BACKGROUND OF THE INVENTION

In general, there are two types of internal combustion engines, one being a reciprocating engine in which a piston performs linear strokes, and the other being a rotary engine in which the piston performs rotary motion. The rotary engine includes a rotor operatively engaged with an engine output shaft, and a rotor housing accommodating therewithin the rotor.

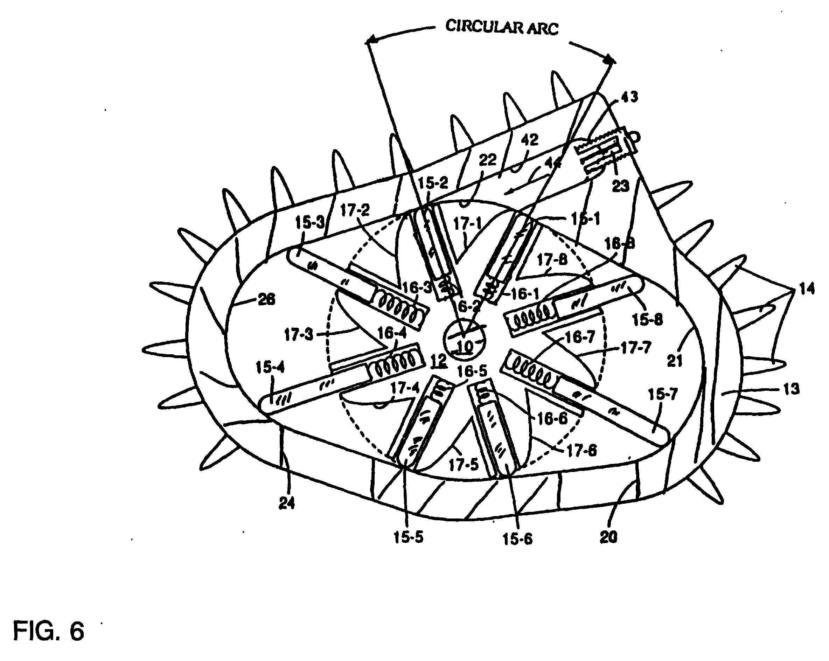

FIG. 6 shows one embodiment of the rotary engine according to this invention by the cross section view taken along a plane perpendicular to an engine output rotary shaft 10. A column- like rotor 12 is fixedly attached to the rotary shaft 10. The rotor 12 is adapted to rotate around the axis of the rotary shaft 10 together therewith in the direction shown by an arrow 11, inside a rotor housing 13 which is provided with a large number of outside radiator fins 14. The output rotary shaft 10 is rotatably supported through suitable airtight bearing means (not shown), and the both side portions of the rotor 12 contact the inner side surfaces of the rotor housing in an airtight condition. As is shown, the rotor housing 13 has an inner wall defining an internal engine compartment within which the rotor 12 is rotated. The circumference of the rotor 12 or the circumference face of the rotation locus of the rotor 12 faces to the inner wall of the rotor housing 13.

In FIG. 6, the rotor 12 describes the cylindrical rotation locus of radius r, and along its circumference, eight telescopic sealing blades 15 (15-1, 15-2, 15-3, 15-4, 15-5, 15-6, 15-7 and 15-8) which will be described in detail hereinafter are positioned at an equally spaced relationship. These sealing blades 15 are elastically attached to the rotor 12 through respective spring means 16 (16-1, 16-2, 16-3, 16-4, 16-5, 16-6, 16-7 and 16-8) so that the respective sealing blades can be elastically biased toward the inner wall surface of the rotor housing 13. The sealing blades themselves can elongate and shorten. During a revolution of the rotor 12, the sealing blades 15 slide along the inner wall surface of the rotor housing 13 with airtight engagement therewith, so that eight compartments are always formed in such way that adjacent two sealing blades divide an engine compartment defined by the rotor 12 and the inner wall of the rotor housing 13. The rotor 12 is provided with notches 17 (17-1, 17-2, 17-3, 17-4, 17-5, 17-6, 17-7 and 17-8). This raising-up portion of the notch acts as a burnt gas pressure-receiving surface as will be described in detail hereinafter

In the operation of the rotary engine shown in FIG. 6, after a sealing blade passed through a suction port 20 provided in the rotor housing 13 and until a next sealing blade passes through the suction port 20, as the result of the fact that negative pressure is produced at the side of the first sealing blade downstream in the rotating direction of the rotor 12, fuel mixture is sucked up through the suction port 20 into the engine compartment defined by the abovementioned first and second sealing blades. In this suction engine cycle, it is desirable to suck fuel mixture as much as possible. The first sealing blade elongates or expands gradually during this suction period. The suction engine cycle is finished when the succeeding second sealing blade has passed through the suction port 20. Then, the fuel mixture which has been sucked and accommodated between these two sealing blades in the suction engine cycle is compressed during the following engine compression cycle. This compression is carried out by the fact that the sealing blades gradually contract in the radial direction as the rotor 12 rotates. That is, during this compression period, as the rotor 12 rotates, the two sealing blades are gradually inserted into the rotor 12 by the sliding thereof along the inner wall of the rotor housing 13 to decrease the volume of the sucked and accommodated fuel mixture.

For example, in the condition shown in FIG. 6, after the sealing blade 15-6 rotated by a little degree and passed through the suction port 20, the mixture gas of air and petroleum fuel which has been accommodated between the sealing blade 15-6 and the preceding sealing blade 15-7 is gradually compressed since the distance between the inner surface section 21 of the rotor housing 13 and the axis of the rotor 12 is gradually decreased. In the position state of the sealing blades 15-1 and 15-2 in FIG. 6, the volume of fuel gas between these sealing blades is made minimum. To this end, a circular arc section 22 is formed on the inner wall of the rotor housing 13 of which radius is substantially equal to the radius r of the rotor 12. Therefore, when the two adjacent sealing blades are positioned on this arc section 22, the sealing blades are in the minimum expansion condition, that is the maximum compression condition, and therefore the mixture is compressed to the maximum level.

In the condition shown in FIG. 6 in which the sealing blades 15-1 and 15-2 are in the maximum compression state, the fuel mixture therebetween exists substantially within the notch 17-1 between these sealing blades in the maximum pressure state. At that time, ignition is made by means of a spark plug 23. In accordance with this invention, the gas pressure produced by the ignition combustion is convened into rotational energy for the rotor 12 with high efficiency.

The respective notch 17 of the rotor 12, which mainly forms the combustion engine chamber, is provided with the above-mentioned raising-up portion in order to provide effective energy conversion of the pressure of burnt gas into rotational energy. Therefore, the raising-up portion of the notch 17 acts as a combustion gas pressure-receiving portion. Preferably, the spark plug 23 is positioned adjacently to the raising-up portion of the notch at the time of the explosion.

Where, surface of the notch is constructed so that it receives the burnt gas blast at a right angle. This means includes a blast guide hole 42 formed in the rotor housing inner wall portion 22 and which opens to the engine combustion chamber. This means also includes a sparking plug 23 mounted at the end 43 at which the blast guide hole is terminated. The length of the blast guide hole 42 from the end thereof to the position of the hole opening from which the blast goes out must be enough for the blast to be directed along the one direction.

Also, it is possible to obtain the burnt gas blast directed along one direction with the blast guide hole 42 having its smaller length. To this end, the shape of the end 43 of the blast guide hole 42 at which the spark plug 23 is mounted is made to a parabolic shape or a shape similar thereto, of which focal point is positioned substantially to the sparking point of the sparking plug 43. As a result, blast produced by the ignition of the spark plug 23 is guided effectively within the hole 42 in the arrow direction 44, and collided with the burnt gas pressure-receiving surface of the notch. It is preferable that the direction 44 of the blast is perpendicular to the burnt gas pressure-receiving surface. This arrangement provides higher efficient rotary force for the rotor The blast guide hole 42 may have any cross-sectional shape as long as it can guide the blast and determine the direction thereof.

After an advanced sealing blade came into the arc section and then a following notch comes into the arc section, filling of fuel gas between this advanced sealing blade and the next sealing blade into the notch sandwiched between these sealing blades is started. As the advanced sealing blade slides along the arc section of the inner wall of the rotor housing, the pressure of the fuel mixture is increased gradually. When the advanced sealing blade is positioned at the left end of the arc section and the succeeding sealing blade is at the right end of the arc section (the illustrated condition by sealing blades 15-2 and 15-1 in FIG. 6), the pressure of the fuel mixture becomes the maximum level, and at that time, ignition by means of a spark plug 23 is executed. At the time, the space of the notch 17-1 which is in the illustrated position in FIG. 6 constitutes an engine combustion compartment.

The circumferential length of the arc section 22 is preferably selected to be slightly larger than the angular distance between the two adjacent sealing blades (15-1 and 15-2). In this invention, it is preferable that the radius of the rotation of the rotor 12 is substantially equal to the radius of the circular arc section of the inner wall of the rotor housing 13. As a result, the sealing blades positioned on the arc section are pushed in to the level of the surface of the rotor. When the two adjacent sealing blades are in the shortened condition shown by the sealing blades 15-2, 15-1 in FIG. 6, surface seals are formed between the positions on the rotor around the two respective sealing blades and the corresponding engaged portions on the inner wall of the rotor housing. This arrangement avoids problems relating to emission of unburned hydrocarbons resulting from large crevice volumes created by the prior art apex seals.

In FIG. 6, burnt gas produced by the explosive combustion of the fuel mixture within the combustion engine chamber is diffused speedily within a pressure diffusion engine chamber, whereby the rotation of the rotor 12 is made more effective. During the combustion gas pressure diffusing cycle of the engine, the preceding sealing blade 15-2 starts to expand quickly from the illustrated explosion position so that the volume defined by the sealing blades 15-2, 15-1 and the inner wall 26 of the rotor housing 13 is correspondingly increased. When and after the preceding sealing blade 15-2 passed through a combustion gas exhaust port 24, the combustion gas is exhausted through the exhaust port 24. The exhaust cycle continues until the following sealing blade 15-1 has passed through the exhaust port 24.

It should be appreciated from the above-mentioned explanation of the construction and operation that during a revolution of the rotor 12, the ignition (that is, the explosion) is carried out by a number of the notches (that is, a number of the sealing blades) provided on the rotor 12. That is to say, it is apparent that in this invention, the sequence of the intake, compression, explosion and exhaust engine cycles is executed repeatedly by a number of the sealing blades of the rotor 12 during one revolution of the rotor.

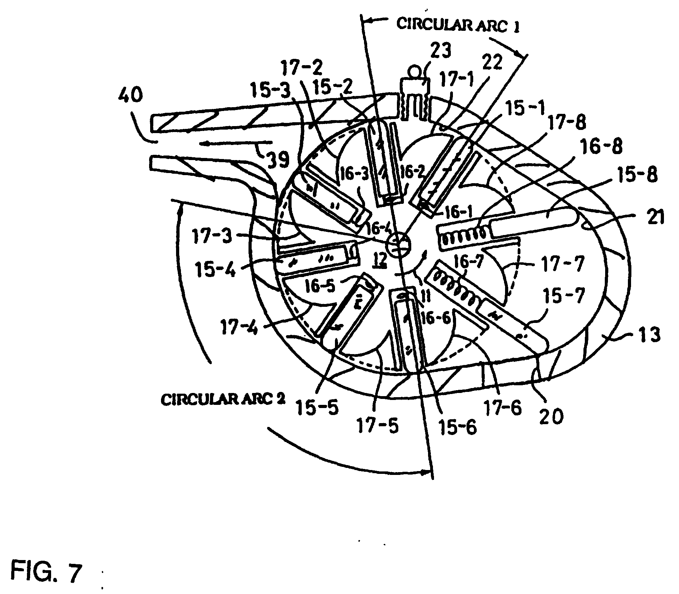

FIG. 7 shows a theoretical explanation view of the prior art rotary jet engine. This rotary jet engine is provided with eight sealing blades 15-1 to 15-8 which are attached on the rotor 12 in the above-mentioned manner and eight notches 17-1 to 17-8 between two adjacent sealing blades which are provided in the rotor 12 in the above-mentioned manner. The operation and function of these sealing blades and notches are the same as those in FIG. 6. The rotor 12 is rotatably supported within the rotor housing 13, which may be cooled in a well-known manner.

In FIG. 7, when a leading sealing blade 15-2 and a following sealing blade 15-1 are brought to the positions shown in the figure, fuel gas is accommodated with its maximum pressure condition within the engine combustion chamber substantially defined by the notch 17-1, and at that time firing or ignition is carried out by the ignition plug 23. Then, due to rotation of the rotor 12, burnt gas jets out in the direction shown by an arrow 39 and goes out from a jet stream ejection port 40. This jet stream is used as jet propulsion force. An increased number of rotation of the rotor 12 can provide a substantially continuous jet stream.

In FIG. 7, on the inner wall of the rotor housing 13, in addition to the first circular arc section (circular arc 1), a second circular arc section (circular arc 2) is provided which defines the engine combustion chamber together with the notch. The sealing blades, which have gone out from the first arc section, do nothing for the engine operations until they go out from the second arc section. The suction port 20 is so positioned and sized that a sealing blade, after has gone out from the second arc section and then passed through the suction port 20, can suck fuel mixture gas through the suction port 20 as much as possible until a next sealing blade passes through the suction port 20.

Since the conventional rotary engine shown in FIG. 6 is constructed such that the expansion volume is the same as the compression volume, maximum engine efficiency up to the theoretical maximum value cannot be obtained as described in the later "Principle of the present invention and the calculation of the theoretical efficiency of the rotary engine".

Since the conventional rotary jet engine shown in FIG. 7 has no expansion chamber, it is impossible to obtain a large propulsion force of the jet engine.

Although there is an overexpansion theory that the engine efficiency increases when the expansion volume is larger than the compression volume, it has been so impractical approach for applying the idea to the reciprocal engine. So the idea of overexpansion cannot come into practical use. Further, in the field of the rotary engine, the idea of the overexpansion can be found nowhere in the world.

Therefore, it is an object of this invention to eliminate the above-mentioned disadvantages of the prior art which can not obtain a theoretical maximum engine efficiency and provide an improved overexpansion rotary engine by which it is possible to output a high torque and obtain high efficiency even at a lower rotation state.

It is another object of this invention to provide a rotary engine having a large rotation force and being easily applicable to a jet propulsion engine.

SUMMARY OF THE INVENTION

According to one aspect of the invention an overexpansion rotary engine comprises an overexpansion rotary engine including a rotor housing having an inner wall; a rotor rotatably mounted within the rotor housing, a plurality of sealing blades mounted within a sealing blade case in the rotor, each sealing blade elastically contacts to the inner wall of the rotor housing an ignitor mounted in a blast guide hole in the rotor housing a compression chamber formed between the two sealing blades after the two sealing blades move past an inlet port along the rotation of the rotor; and an expansion chamber formed between two sealing blades after the two sealing blades move past the ignitor along the rotation of the rotor, wherein a maximum volume of the expansion chamber is greater than a maximum volume of the compression chamber.

According to another aspect of the invention, an overexpansion jet rotary engine includes a rotor housing having an inner wall; a rotor rotatably mounted within the rotor housing, a plurality of sealing blades mounted within a sealing blade case in the rotor, each sealing blade elastically contacts to the inner wall of the rotor housing; an ignitor mounted in a blast guide hole in the rotor housing; a compression chamber formed between the two sealing blades after the two sealing blades move past an inlet port along the rotation of the rotor; an expansion chamber formed between two sealing blades after the two sealing blades move past the ignitor along the rotation of the rotor, and a jet stream ejection port formed in order to exhaust the combustion gas jet stream, wherein a maximum volume of the expansion chamber is greater than a maximum volume of the compression chamber.

BRIEF DESCRIPTION OF THE DRAWINGS

FIG. 1 is a cross-section view of an embodiment of an overexpansion rotary engine according to the invention.
FIG. 2 is an enlarged view of a sealing blade, an inlet port, an exhaust port of FIG. 1.
FIG. 3 shows an enlarged view of the sealing blades of the rotary engine according to the present invention.
FIG. 4 is a cross-section view of another embodiment of an overexpansion rotary jet engine according to the invention.
FIG. 5 is a pressure-volume diagram showing the Otto, Carnot, and overexpansion cycles.
FIG. 6 is a cross-section view of a rotary engine according to a prior art rotary engine.
FIG. 7 is a cross-section view of a rotary jet engine according to a prior art rotary engine.

DESCRIPTION OF THE PREFERRED EMBODIMENTS

Embodiment 1.

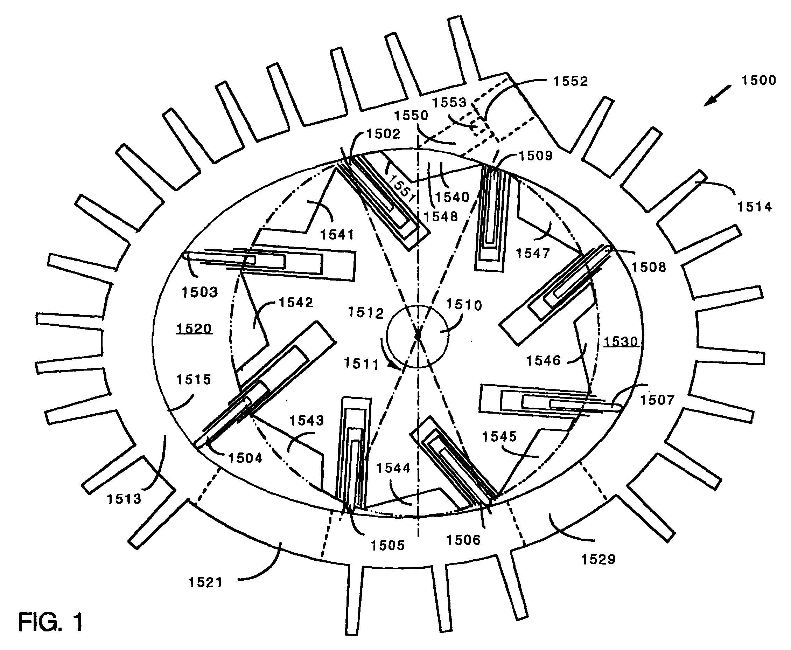

FIGS. 1-3 show overexpansion rotary engine of an embodiment of the invention. FIG. 1 shows the embodiment of the overexpansion rotary engine 1500 in a cross-section view taken along a plane perpendicular to an engine output rotary shaft 1510. A column-like rotor 1512 is fixedly attached to the rotary shaft 1510. The rotor 1512 is adapted to rotate around the axis of the rotary shaft 1510 together therewith in the direction shown by an arrow 1511, inside a rotor housing 1513, which may be provided with a large number of outside radiator fins 1514 for heat dissipation, if desired. The rotor housing, which constructs the engine, may for example be an ellipse, or a combination of a circle and straight lines or other shapes.

The output rotary shaft 1510 is rotatably supported through suitable airtight bearings (not shown), and the both side portions of the rotor 1512 contact inner side surfaces of the rotor housing 1513 in an airtight condition. As is shown, the rotor housing 1513 has an inner wall 1515 defining an internal engine compartment within which the rotor 1512 is rotated. The circumference of the rotor 1512, that is, the circumference face of the rotation locus of the rotor 1512 abuts the inner wall 1515 in at least two places. The circular circumference of the rotor 1512 is indicated by a broken circle around the rotor 1512. The overexpansion rotary engine 1500 has an inlet port 1529 where fuel mixture is inserted and an exhaust port 1521 where combustion gas is exhausted.

In FIG. 1, the rotor 1512 describes the cylindrical rotation locus of radius R, and along its circumference, eight sealing blades 1501-1508 are positioned equally spaced from each other These sealing blades are resiliently attached to the rotor 1512, so that the respective sealing blades can be resiliently biased toward the inner wall surface of the rotor housing 1513. The sealing blades 1501-1508 are telescoping blades, and preferably have at least two telescoping segments. The blades can be spring loaded, although pressure systems or other systems could be used to urge the blades outward from the rotor and into contact with the inner wall 1515. Preferably, the direction of the expansion or elongation and compression or shortening of each of the sealing blades is at an angle with respect to the radius of the rotor 1512.

During a revolution of the rotor 1512, the sealing blades 1501-1508 slide along the inner wall surface 1515 with airtight engagement therewith, so that eight compartments are always formed. The compartments are formed in such way that two adjacent sealing blades, together with portions of the rotor 1512 and the inner wall 1515, define an engine compartment. A larger or smaller number of blades can be used as desired.

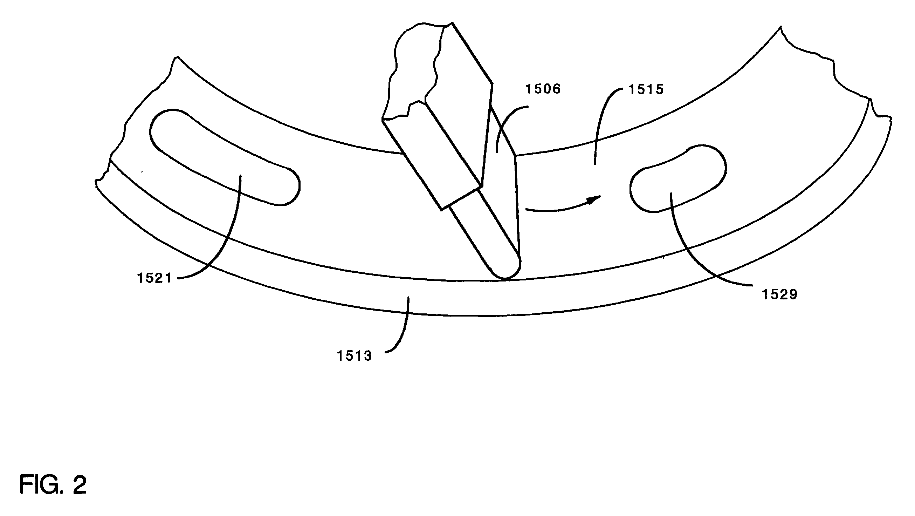

FIG. 2 schematically shows a perspective view of the sealing blade 1506 moving along the inner wall 1515. The sealing blade 1506 (partially shown) has passed the exhaust port 1521 and is approaching the inlet port 1529.

Returning to FIG. 1, the rotor 1512 is provided with notches 1541-1548, each of which extends in the axial direction of the rotor 1512 and has a curved configuration. A spark plug 1553 is located in a blast guide hole 1550 as schematically illustrated in FIG. 1. The space defined by the blast guide hole 1550 and one of the notches 1541-1548 which is presently positioned adjacent the blast guide hole 1550 forms a combustion chamber 1540. In FIG. 1 the notch 1548 is positioned adjacent the blast guide hole 1550. The blast guide hole 1550 is oriented substantially perpendicular to the burnt gas pressure-receiving surface 1551.

It is noted that the rotor housing 1513 slightly deviates from its symmetric shape adjacent the combustion chamber 1540. The center of the rotor 1512 is displaced toward the blast guide hole 1550 from a center of the rotor housing 1513. The shape of the rotor housing 1513 allows a firm sealing of the combustion gas chamber 1540.

Three dashed lines are drawn through the center of the rotor 1512, but not through the center of the rotor housing 1513 in FIG. 1. The left and right dashed lines deviate by 22.5 degrees from the center line in case of eight sealing blades. In the shown position of the rotor 1512, the sealing blades 1502 and 1509 contact the inner wall 1515 at the left and right dashed lines, respectively Adjacent to the combustion chamber 1540, the circumference of the rotor 1512 meets the inner wall 1515 at the contact points indicated by the dashed lines.

A rear wall 1552 of the blast guide hole 1550 is schematically illustrated as being substantially perpendicular to a longitudinal direction of the blast guide hole 1550. It is noted that the rear wall 1552 may be formed with different shapes. For example, the rear wall 1552 may have a parabolic shape, and the spark plug 1553 may be positioned in the focus of the parabolic rear wall.

The volume between two sealing blades forms a compression chamber 1530 when the trailing blade of the two moves past the inlet 1529. The volume between two sealing blades just as the leading blade of the two reaches the exhaust 1521 forms an expansion chamber 1520. The overexpansion rotary engine 1500 has a feature of "overexpansion", that is, the maximum volume of the expansion chamber 1520 is greater than the maximum volume of the compression chamber 1530. This is accomplished by forming the inner wall 1515 with greater curvature by the expansion chamber 1520 than by the compression chamber 1530. The ratio between the respective maximum volumes of the expansion chamber 1520 and the compression chamber 1530 is greater than 1: 1, but if it is too high, there is not sufficient pressure to exhaust the combustion gas.

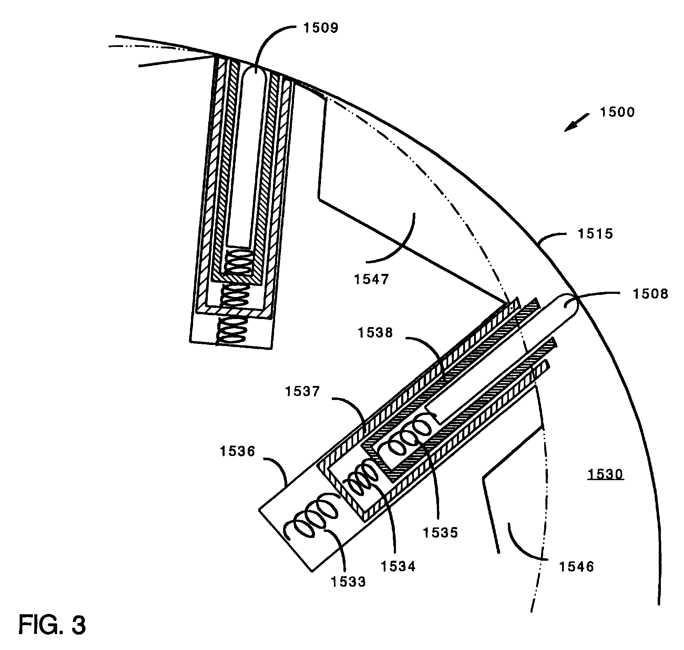

FIG. 3 shows an enlarged view of the sealing blade body of the rotary engine according to the present invention. In FIG. 3, the sealing blade body 1508 is accommodated or contained within the first sealing blade case 1538, and a spring means such as a coil spring 1535 is provided between the lower end of the sealing blade body 1508 and the bottom of the first sealing blade case 1538. A plurality of coil springs 1535 may be arranged at intervals in the axial direction of the rotor 12. The first sealing blade case 1538 is telescopically accommodated within a second sealing blade case 1537. A coil spring 1534 is provided between the lower end of the first case 1538 and the bottom of the second sealing blade case 1534. A plurality of coil springs 1534 may be arranged at intervals in the axial direction of the rotor 12. The second sealing blade case 1537 is accommodated within the opening 1536 of the rotor 12 through a spring 1533. A plurality of coil springs 1533 may be ranged at intervals in the axial direction of the rotor 12. An airtight construction is provided between the sealing blade body 1508 and the first sealing blade case 1538, between the first sealing blade case 1538 and the second sealing blade case 1537 and between the second sealing blade case 1537 and the opening 1536 of the rotor 12 in the well-known manner, for example, by providing the grooves. Therefore, the sealing blade body 1508 is elastically pressurized toward the inner surface 1515 of the rotor housing 1513 in the longitudinal direction. The above is the same for other sealing blades.

Embodiment 2.

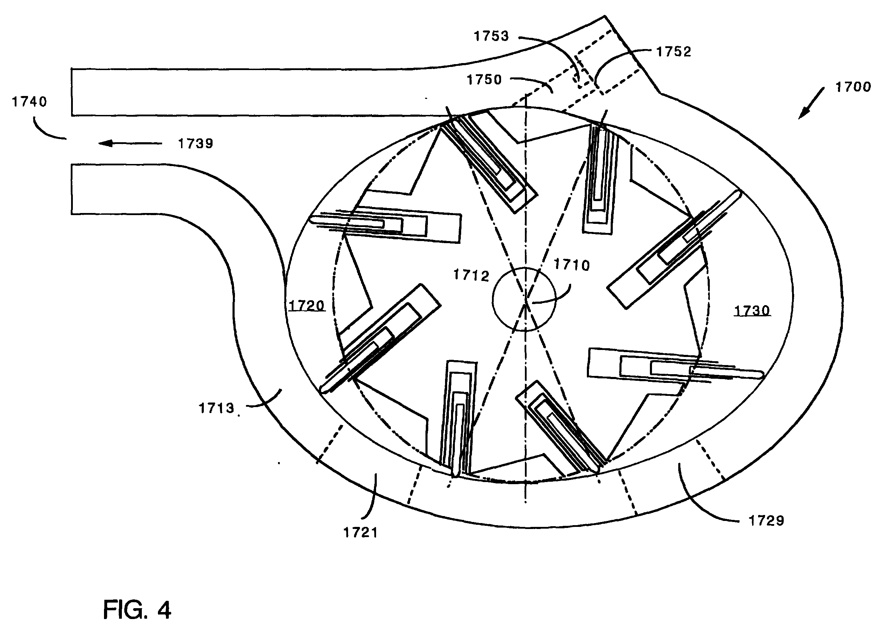

FIG. 4 schematically shows another embodiment of an overexpansion rotary jet engine 1700. The overexpansion rotary jet engine 1700 has a rotor 1712 rotatably arranged on a rotor shaft 1710. The overexpansion rotary jet engine 1700 may be configured substantially similar to the rotary jet engine shown in FIG. 7. The rotary jet engine of the present invention, however, has an expansion chamber smaller than the compression chamber, although the conventional rotary jet engine has no expansion chamber According to providing this expansion chamber smaller than the compression chamber, this rotary jet engine can obtain a rotary jet engine having a large jet propulsion force.

In FIG. 4, the rotor 1712 rotates inside a rotor housing 1713, which has a blast guide hole 1750 including a spark plug 1753 near a rear wall 1752. The shape of the rear wall 1752 may be parabolic, and the spark plug 1753 may be located at the focus of the parabolic rear wall. The blast guide hole 1750 is angled with respect to a radius of the rotor 1712, in order for the combustion forces to better exert driving force against the rotor 1712.

The overexpansion rotary jet engine operates through consecutively drawing fuel mixture, compressing it and igniting, and by exhausting the combustion gas substantially as described earlier. After ignition, the combustion gas flows in the direction indicated by arrow 1739, and exits though a jet stream ejection port 1740. The overexpansion rotary jet engine 1700 may be used to get the jet stream for providing a jet propulsion force. An exhaust port 1721 may be provided through the rotor housing 1713 if necessary to obtain sufficient exhaustion of combustion gas. An inlet port 1729 is provided through the rotor housing 1713.

A compression chamber 1730 is located on one side of the rotor 1712. On the expansion side 1720, more volume is provided for expansion of the combustion gas than, for example, in the conventional rotary jet engine shown in FIG. 7. The rotor housing 1713 has been provided with a shape somewhat different from that shown in FIG. 7 to provide the extra volume adjacent to the jet stream ejection port 1740.

Principle of the present invention and calculation of the theoretical efficiency of the rotary engine

An analytic discussion of the principles and advantages of overexpansion rotary engines will now be provided. In an overexpansion rotary engine, the expansion ratio is higher than the compression ratio. Logical calculations clearly indicate that the energy efficiency dramatically increase by designing the expansion ratio to be higher than the compression ratio.

Before explaining the overexpansion rotary engine, conventional Otto-cycle and Carnot-cycle are explained.

1. Basic calculation of the temperature increase when combusting gasoline

Gasoline heating value H= 10,000 kcal/kg
Combustible gas mixture and combustion gas

$$k=C_P/C_V=1.4$$

$$C_P=0.24 \text{kcal/kg}°C$$

$$C_V=0.172 \text{kcal/kg}°C$$

$$R=29.3 \text{kgm/kg}°C$$

When gasoline isometrically bums by excess air ratio $\lambda = 1.2$, the temperature increase $\Delta T$ is;

$$\Delta T = \frac{H}{C_v(L+1)} = \frac{10,000}{0.172 \times 18.4} = 3,200°C$$

where the air supply $L = \lambda\, L_{th} = 1.2 \times 14.5 = 17.4 \text{kg/m}^2$

2. Theoretical formula of the Otto cycle

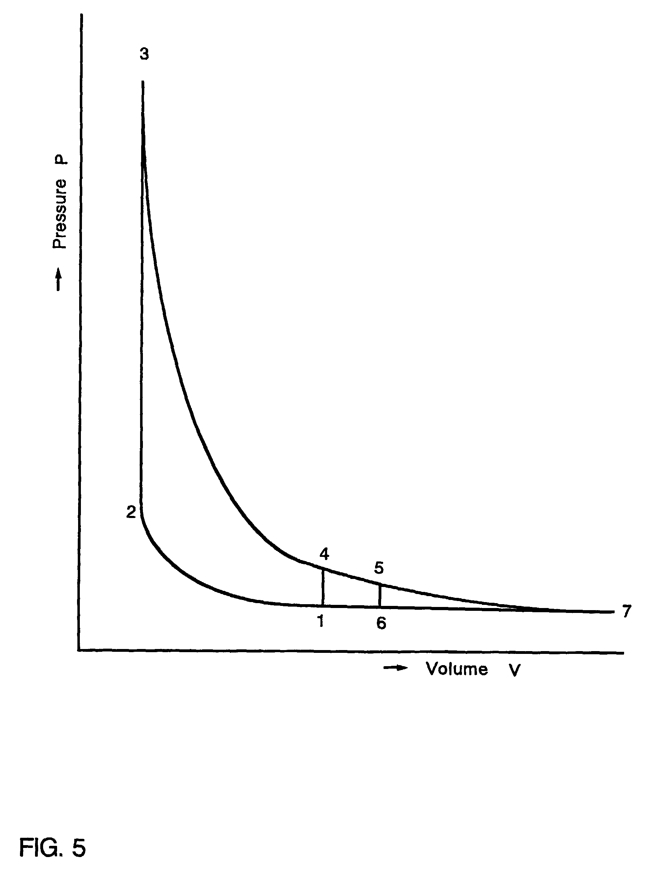

The Otto cycle is represented by the transitions $1\to2\to3\to4\to1$ in FIG. 5, which is a pressure-volume (P - V) diagram. Subscript indices (1, 2 .... etc.) denote the points 1, 2 .... etc. indicated in FIG. 5.

• Transition $1\to2$: Adiabatic compression, $\varepsilon$ : compression ratio

$$\frac{P_2}{P_1} = \left(\frac{V_1}{V_2}\right)^k = \varepsilon^k$$

$$\frac{T_2}{T_1} = \left(\frac{V_1}{V_2}\right)^{k-1} = \varepsilon^{k-1}$$

• Transition $2\to3$: Isometric heating

$$\frac{T_3}{T_2} = \frac{P_3}{P_2} = \alpha$$

$$Q_1 = mCv\,(T_3 - T_2)$$

where m refers to gas weight.

$$T_3 = T_2 + \Delta T$$

• Transition $3\to4$: Adiabatic expansion

$$\frac{P_4}{P_3} = \left(\frac{V_3}{V_4}\right)^k = \left(\frac{V_2}{V_1}\right)^k = \left(\frac{1}{\varepsilon}\right)^k = \frac{1}{\varepsilon^k}$$

$$\frac{T_4}{T_3} = \left(\frac{V_3}{V_4}\right) = \left(\frac{V_2}{V_1}\right) = \frac{1}{\varepsilon^{k-1}}$$

• Transition $4\to1$: Isometric cooling

$$\frac{T_4}{T_1} = \frac{P_4}{P_1} = \alpha\left(= \frac{P_3}{P_2}\right)$$

$$Q_2 = mC_v(T_4 - T_1)$$

$$\text{Work } w = Q_1 - Q_2$$

$$\text{Efficiency } \eta = \frac{Q_1 - Q_2}{Q_1} = 1 - \frac{Q_2}{Q_1} = 1 - \frac{mC_v(T_4 - T_1)}{mC_v(T_3 - T_2)} = 1 - \frac{T_4 - T_1}{T_3 - T_2}$$

$$= 1 - \frac{T_4 - T_1}{\varepsilon^{k-1}(T_4 - T_1)} = 1 - \frac{1}{\varepsilon^{k-1}}$$

3. Carnot (ideal) cycle

The Carnot cycle is represented by the transitions $1 \rightarrow 2 \rightarrow 3 \rightarrow 7 \rightarrow 1$ in FIG. 5. It is noted that transitions $1 \rightarrow 2 \rightarrow 3$ are the same as in the Otto cycle.

• Transition $1 \rightarrow 2 \rightarrow 3$:

$$P_2 = P_1 \varepsilon^k$$

$$T_2 = T_1 \varepsilon^{k-1}$$

$$T_3/T_2 = P_3/P_2 = \alpha$$

$$P_3 = \alpha P_2 = P_1 \alpha \varepsilon^k$$

$$T_3 = \alpha T_2 = T_1 \alpha \varepsilon^{k-1}$$

$$Q_1 = mC_v(T_3 - T_2)$$

• Transition $3 \rightarrow 7$: Adiabatic expansion

$$P_7 = P_1 = P_3/\varepsilon_e^k = P_1 \alpha \varepsilon^k/\varepsilon_e^k = P_1 \alpha(\varepsilon/\varepsilon_e)^k$$

Therefore, $\alpha(\varepsilon/\varepsilon_e)^k = 1$

$$\varepsilon/\varepsilon_e = (1/\alpha)^{1/k} = 1/\alpha^{1/k}$$

$$\varepsilon_e = \varepsilon \alpha^{1/k}$$

$$T_7 = T_3/\varepsilon_e^{k-1} = T_1 \alpha \varepsilon^{k-1}/\varepsilon_e^{k-1} = T_1 \alpha(\varepsilon/\varepsilon_e)^{k-1}$$

$$V_7 = (V_1/\varepsilon)\varepsilon_e = V_1 \varepsilon_e/\varepsilon$$

• Transition $7 \rightarrow 1$: Isobaric cooling

$$P1 = P7$$

$$Q_p = mC_p(T_7 - T_1)$$

8

$$\text{Efficiency } \eta = 1 - \frac{Q_p}{Q_1} = 1 - \frac{mC_p(T_7 - T_1)}{mC_v(T_3 - T_2)} = 1 - k\frac{T_7 - T_1}{T_3 - T_2}$$

$$= 1 - \frac{T_1\alpha(\varepsilon/\varepsilon_e)^{k-1} - T_1}{T_1\alpha\varepsilon^{k-1} - T_1\varepsilon^{k-1}} = 1 - k\frac{\alpha(\varepsilon/\varepsilon_e)^{k-1} - 1}{\varepsilon^{k-1}(\alpha - 1)}$$

4. Overexpansion cycle

Theoretical calculation of the rotary engine of the present invention when the expansion ratio is larger than the compression ration is explained below. If the expansion ratio is higher than the compression ratio, it is able to obtain greater energy efficiency according to the theoretical calculation. While the idea of overexpansion has been considered, attempts to apply it to reciprocating engines have failed as being too impractical to implement. On the other hand, the present rotary engine, in contrast, makes overexpansion easy to. The overexpansion cycle of the present invention is represented by the transitions $1 \rightarrow 2 \rightarrow 3 \rightarrow 5 \rightarrow 6 \rightarrow 1$ in FIG. 5

• Transition $1 \rightarrow 2 \rightarrow 3$:

Transitions $1 \rightarrow 2 \rightarrow 3$ are the same as that of the Otto cycle.

$$T_2 = T_1\varepsilon^{k-1}$$

$$P_2 = P_1\varepsilon^k$$

$$T_3 = \alpha T_2 = T_1\alpha\varepsilon^{k-1}$$

$$P_3 = \alpha P_2 = P_1\alpha\varepsilon^k$$

$$Q_1 = mC_v(T_3 - T_2)$$

• Transition $3 \rightarrow 5$: Adiabatic expansion (expansion ratio $\varepsilon_e$ > compression ration $\varepsilon$)

$$T_3/T_5 = (T_5/T_3)^{k-1} = \varepsilon_e^{k-1}$$

$$T_5 = T_3/\varepsilon_e^{k-1} = T_1\alpha\varepsilon^{k-1}/\varepsilon_e^{k-1} = T_1\alpha(\varepsilon/\varepsilon_e)^{k-1}$$

$$P_3/P_5 = (V_5/V_3)^k = \varepsilon_e^k$$

$$P_5 = P_3/\varepsilon_e^k = P_1\alpha\varepsilon^k/\varepsilon_e^k = P_1\alpha(\varepsilon/\varepsilon_e)^k$$

• Transition $5 \rightarrow 6$: Isometric cooling

$$P_6 = P_1$$

$$T_5/T_6 = \alpha_e = P_5/P_6 = P_5/P_1 = \alpha(\varepsilon/\varepsilon_e)^k$$

$$T_6 = T_5/\alpha_e = (T_5/\alpha)(\varepsilon_e/\varepsilon)^k$$
$$= T_1(\varepsilon/\varepsilon_e)^{k-1}(\varepsilon_e/\varepsilon)^k = T_1(\varepsilon_e/\varepsilon)^{k-k+1} = T_1(\varepsilon_e/\varepsilon)$$

$$Q_v = mC_v(T_5 - T_6)$$

• Transition 6→1: Isobaric cooling

$$Q_p = mC_p(T_6 - T_1)$$

$$\text{Efficiency } \eta = 1 - \frac{Q_v - Q_p}{Q_1} = 1 - \frac{mC_v(T_5 - T_6) + mC_v(T_6 - T_1)}{mC_v(T_3 - T_2)}$$

$$= 1 - \frac{(T_5 - T_6) + k(T_6 - T_1)}{T_3 - T_2}$$

$$= 1 - \frac{\{T_1\alpha(\varepsilon/\varepsilon_e)^{k-1} - T_1(\varepsilon/\varepsilon_e)\} + k\{T_1(\varepsilon_e/\varepsilon) - T_1\}}{T_1\alpha\varepsilon^{k-1} - T_1\varepsilon^{k-1}}$$

$$= 1 - \frac{\{\alpha(\varepsilon/\varepsilon_e)^{k-1} - (\varepsilon/\varepsilon)\} + k\{(\varepsilon_e/\varepsilon) - 1\}}{\varepsilon^{k-1}(\alpha - 1)}$$

5. An example of Otto cycle calculation

(assuming $T_1$ = 300K (27°C), $P_1$ = 1 kg/cm$^2$)

5.1 In case of compression ratio $\varepsilon$=8, expansion ration $\varepsilon_e$=8;

i) P1=1 kg/cm$^2$, $T_1$ = 300 K (27°C)
ii) $P_2 = P_1\varepsilon^k = 1 \times 8^{1.4}$ = 18.4 kg/cm$^2$
$T_2 = T_1\varepsilon^{k-1} = 300 \times 8^{0.4}$ = 689K (416°C)
iii) $T_3 = T_2 + 3200 = 3889K (3616°C)$
$\alpha = T_3/T_2 = 3889/689 = 5.64$
$P_3 = \alpha P_2 = 5.64 \times 18.4 = 104$kg/cm$^2$
iv) $P_4 = P_3/\varepsilon^k = 104/8^{1.4} = 5.66$kg/cm$^2$
$T_4 = T_3/\varepsilon^{k-1} = 1692K (1420°C)$
Efficiency $\eta = 1 - 1/\varepsilon^{k-1} = 1 - 1/8^{0.4} = 0.56$ (56%)

5.2 In case of compression ratio $\varepsilon$ = 10, expansion ration $\varepsilon_e$ = 8;

i) $P_1$=1 kg/cm$^2$, $T_1$ = 300 K (27°C)
ii) $P_2 = P_1\varepsilon^k = 1 \times 10^{1.4}$ = 25.1 kg/cm$^2$
$T_2 = T_1^{k-1} = 300 \times 10^{0.4}$ = 753K (480°C)
iii) $T_3 = T_2 + 3200 = 3953K (3680°C)$
$\alpha = T_3/T_2 = 3953/753 = 5.25$
$P_3 = \alpha P2 = 5.25 \times 25.1 = 132$kg/cm$^2$
iv) $P_4 = P_3/\varepsilon^k = 132/10^{1.4} = 5.25$kg/cm$^2$
$T_4 = T_3/\varepsilon^{k-1} = 1573K (1300°C)$
Efficiency $\eta = 1 - 1/\varepsilon^{k-1} = 1 - 1/10^{0.4} = 0.6(60\%)$

Thus, in the case of a reciprocal engine for the usual Otto cycle, the energy efficiency is 56%, when the compression ratio $\varepsilon$ is 10 and expansion ration $\varepsilon_e$ is 8. If the expansion ratio is 13, the energy efficiency becomes 63%, even if the compression ratio $\varepsilon$ is 8. Theoretically, the energy efficiency increases by 7%. The energy efficiency becomes 63%, even if the compression ratio $\varepsilon$ is 8. The energy efficiency becomes 60%, when the compression ratio $\varepsilon$ is 10, and the expansion ration $\varepsilon_e$ is 10.

6. An example of Carnot cycle calculation

6.1 In case of compression ratio $\varepsilon$ = 8%, expansion ration $\varepsilon_e$=8;

The transitions 1→2→3 are the same as those of the Otto cycle.

i) $P_1$=1 kg /cm$^2$
$T_1$ = 300 K (27°C)
ii) $P_2 = P_1\varepsilon^k$ = 18.4 kg/cm$^2$
$T_2 = T_1^k$ = 300×8$^{0.4}$= 689K (416°C)
iii) $T_3 = T_2$+ 3200 = 3889K (3616°C)
$P_3$= 18.4×5.64 = 104 kg/cm$^2$
vii) $P_7$=$P_1$ =1 kg/cm$^2$
$\varepsilon_e$=$\varepsilon\alpha^{1/k}$=8×5.64$^{1/1.4}$=27.5
$T_7$=$T_1\alpha(\varepsilon/\varepsilon_e)^{k-1}$=300×5.64(8/27.5)$^{k-1}$=1033K(760°C)
$V_7$=$V_1\varepsilon_e/\varepsilon$=$V_1$×27.5/8=3.4$V_1$

$$\text{Efficiency } \eta = 1-1.4\frac{5.64(8/27.5)^{0.4}-1}{8^{0.4}\times4.64}=0.68=68\%$$

6.2 In case of compression ratio $\varepsilon$ = 10 expansion ration $\varepsilon_e$=8; Transitions 1→2→3 are the same as that of the Otto cycle.

i) $P_1$=1 kg/cm$^2$
$T_1$ =300 K (27°C)
ii) $P_2$=$P_1\varepsilon^k$ = 25.1 kg/cm$^2$
$T_2$=$T_1\varepsilon^k$=300×10$^{0.4}$=753K (480°C)
iii) $T_3 = T_2$ + 3200 = 3953K (3680°C)
$P_3$ = 5.25×52.1 = 132kg/cm$^2$
vii) $P_7$=$P_1$ =1 kg/cm$^2$
$\varepsilon_e = \varepsilon\alpha^{1/k}$=10×5.25$^{1/1.4}$=32.7
$T_7 = T_1\alpha(\varepsilon/\varepsilon_e)^{k-1}$ =300 × 5.15(10/32.7)$^{k-1}$=980K(707°C)
$V_7$=$V_1\varepsilon_e/\varepsilon$ =$V_1$ × 32.7/10 = 3.3$V_1$

$$\text{Efficiency } \eta = 1-1.4\frac{5.25(10/32.5)^{0.4}-1}{10^{0.4}\times4.25}=0.70=70\%$$

When calculating the efficiency of the ideal engine operating by Carnot cycle, the theoretical energy efficiency becomes 68% when compression ratio $\varepsilon$ is 8, and the expansion ration $\varepsilon_e$ is 8 and no further higher efficiency can be obtained. The theoretical energy efficiency becomes 70% when compression ratio $\varepsilon$ is 10, and the expansion ration $\varepsilon_e$ is 10, and no further higher efficiency can be obtained.

7. An example of Overexpansion cycle calculation

7.1 In case of compression ratio $\varepsilon$ = 8, expansion ration $\varepsilon_e$ =13; The transitions 1→2→3 are the same as those of the Otto cycle.

i) $P_1$=1 kg/cm$^2$
$T_1$ = 300 K (27°C)
ii) $P_2$= 18.4 kg/cm$^2$
$T_2$ = 689K (416°C)
iii) $T_3 = T_2$ + 3200 = 3889K (3616°C)
$\alpha$ = 3889/689 = 5.64
$P_3$ = 5.64×18.4 = 104 kg/cm$^2$
iv) $P_4$ = 104/8$^{1.4}$ = 5.66kg/cm$^2$
$T_4$=3889/8$^{0.4}$ = 1693K (1420°C)

v) $P_5 = 104/13^{1.4} = 2.87$ kg/cm$^2$
$T_5 = 3899/13^{0.4} = 1394$K (1121°C)
vi) $P_6 = P_1 = 1$ kg/cm$^2$
$P_5/P_6 = 2.87 = \alpha_e$
$T_6 = T_5/\alpha_e = 1394/2.87 = 486$K (213°C)

$$\text{Efficiency } \eta = 1 - \frac{(T_5 - T_6) + k(T_6 - T_1)}{T_3 - T_2}$$

$$= 1 - \frac{(1395 - 486) + 1.4(486 - 300)}{3889 - 689} = 0.63 = 63\ \%$$

7.2 In case of compression ratio $\varepsilon = 8$, expansion ration $\varepsilon_e = 20$; The transitions $1\to2\to3$ are the same as those of the Otto cycle.

i) $P_1 = 1$ kg/cm$^2$
$T_1 = 300$ K (27°C)
ii) $P_2 = 18.4$ kg/cm$^2$
$T_2 = 689$K (416°C)
iii) $T_3 = T_2 + 3200 = 3889$K (3616°C)
$\alpha = 3889/689 = 5.64$
$P_3 = 5.64 \times 18.4 = 104$ kg/cm$^2$
iv) $P_4 = 104/8^{1.4} = 5.66$ kg/cm$^2$
$T_4 = 3889/8^{0.4} = 1693$K (1420°C)
v) $P_5 = 104/20^{1.4} = 1.57$ kg/cm$^2$
$T_5 = 3899/20^{0.4} = 1173$K(900°C)
vi) $P_6 = P_1 = 1$ kg/cm$^2$
$P_5/P_6 = 1.56 = \alpha_e$
$T_6 = T_5/\alpha_e = 1123/1.56 = 752$K(479°C)

$$\text{Efficiency } \eta = 1 - \frac{(T_5 - T_6) + k(T_6 - T_1)}{T_3 - T_2}$$

$$= 1 - \frac{(1173 - 752) + 1.4(752 - 300)}{3889 - 689}$$

7.3 In case of compression ratio $\varepsilon = 10$, expansion ration $\varepsilon_e = 20$; The transitions $1\to2\to3$ are the same as those of the Otto cycle.

i) $P_1 = 1$ kg/cm$^2$
$T_1 = 300$ K (27°C)
ii) $P_2 = 25.1$ kg/cm$^2$
$T_2 = 753$K (480°C)
iii) $T_3 = T_2 + 3200 = 3593$K (3680°C)
$\alpha = 3953/753 = 5.25$
$P_3 = 5.25 \times 25.1 = 132$ kg/cm$^2$
iv) $P_4 = 132/10^{1.4} = 5.25$ kg/cm$^2$
$T_4 = 3953/10^{0.4} = 1573$K (1300°C)
v) $P_5 = 132/20^{1.4} = 1.99$ kg/cm$^2$
$T_5 = 3953/20^{0.4} = 1193$K (920°C)
vi) $P_6 = P_1 = 1$ kg/cm$^2$
$P_5/P_6 = 1.99 = \alpha_e$
$T_6 = T_5/\alpha_e = 1193/1.99 = 599$K (326°C)

$$\text{Efficiency } \eta = 1 - \frac{(T_5 - T_6) + k(T_6 - T_1)}{T_3 - T_2}$$

$$= 1 - \frac{(1193 - 599) + 1.4(599 - 300)}{3953 - 753} = 0.68 = 68\%$$

The theoretical energy efficiency of the present invention is obtained as 68% when compression ratio is 8 and expansion ratio is 13, as about 67% when compression ratio is 8 and expansion ratio is 20, as about 68% when compression ratio is 10 and expansion ratio is 20, and the exhaust pressure becomes about 1.99 atmosphere (atm). The theoretical energy efficiency of the conventional reciprocal engine is about 60% when compression ratio is 10 and expansion ratio is 10. Therefore, the energy efficiency of the rotary engine of the present invention is expected to be higher by 8% than that of the reciprocal engine.

In other words, in this invention it is easy to manufacture a rotary engine having a higher expansion ratio than compression ratio. This means that it is easy to increase the engine energy efficiency.

It should be understood that although preferred embodiments of this invention have been illustrated and described, various modifications thereof would become apparent to those skilled in the art. For example, although in the drawings a single mixture suction port was shown, a plurality of mixture suction ports may be provided at intervals in the axial direction of the rotor. Also, a plurality of combustion gas exhaust ports may be provided at intervals in the axial direction of the rotor. Further, in case where many sealing blades are used, it is possible to divide the engine compression, combustion and combustion gas diffusion chambers by one or more airtight bulkheads arranged at intervals in the axial direction of the rotor to provide plural parallel engine arrangement.

As described above, the rotary engine of the present invention can be used as an engine of the car and ship. Further, the rotary engine of the present invention can be used as a jet engine of the aircraft.

**Claims**

1. An overexpansion rotary engine including a rotor housing having an inner wall; a rotor rotatably mounted within the rotor housing, a plurality of sealing blades mounted within a sealing blade case in the rotor, each sealing blade elastically contacts to the inner wall of the rotor housing; an ignitor mounted in a blast guide hole in the rotor housing; a compression chamber formed between the two sealing blades after the two sealing blades move past an inlet port along the rotation of the rotor; and an expansion chamber formed between two sealing blades after the two sealing blades move past the ignitor along the rotation of the rotor, wherein a maximum volume of the expansion chamber is greater than a maximum volume of the compression chamber.

2. The overexpansion rotary engine of claim 1, said rotor has a plurality of notches, each notch located between two adjacent sealing blades.

3. The overexpansion rotary engine of claim 1, said blast guide hole has a substantially parabolic rear wall.

4. The overexpansion rotary engine of claim 1, said each sealing blade comprises a sealing blade body and a plurality of sealing blade cases, and moves telescopically along the inner wall of the opening of the rotor.

5. The overexpansion rotary engine of claim 4, said sealing blades contact the inner wail of the rotor housing by spring devices.

6. An overexpansion rotary engine including a rotor housing having an inner wall; a rotor rotatably mounted within the rotor housing, a plurality of sealing blades mounted within a sealing blade case in the rotor, each sealing blade elastically contacts to the inner wall of the rotor housing; an ignitor mounted in a blast guide hole in the rotor housing; a compression chamber formed between the two sealing blades after the two sealing blades move past an inlet port along the rotation of the rotor; an expansion chamber formed between two sealing blades after the two sealing blades move past the ignitor along the rotation of the rotor, and a jet stream ejection port formed in order to exhaust the combustion gas jet stream, wherein a maximum volume of the expansion chamber is greater than a maximum volume of the compression chamber.

7. The overexpansion rotary jet engine of claim 6, further comprising an exhaust port in the rotary housing at the expansion chamber side.

FIG. 1

FIG. 2

FIG. 3

EP 1 022 446 A1

FIG. 4

EP 1 022 446 A1

FIG. 5

FIG. 6

CIRCULAR ARC

FIG. 7

# INTERNATIONAL SEARCH REPORT

| International application No. |
| --- |
| PCT/JP98/03118 |

**A. CLASSIFICATION OF SUBJECT MATTER**
Int.Cl⁶ F02B53/00

According to International Patent Classification (IPC) or to both national classification and IPC

**B. FIELDS SEARCHED**

Minimum documentation searched (classification system followed by classification symbols)
Int.Cl⁶ F02B53/00

Documentation searched other than minimum documentation to the extent that such documents are included in the fields searched

| | | | |
| --- | --- | --- | --- |
| Jitsuyo Shinan Koho | 1950-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 7-293264, A (Saito & Co., Ltd.), 7 November, 1995 (07. 11. 95) (Family: none) | 1-7 |
| Y | JP, 4-14737, U (Hajime Hayashiya), 6 February, 1992 (06. 02. 92) (Family: none) | 1-7 |
| Y | JP, 3-206321, A (Hajime Hayashiya), 9 September, 1991 (09. 09. 91) (Family: none) | 1-7 |
| Y | JP, 1-182528, A (Satoshi Yamaguchi), 20 July, 1989 (20. 07. 89) (Family: none) | 1-7 |
| Y | JP, 61-40422, A (Hiroyuki Ozeki), 26 February, 1986 (26. 02. 86) (Family: none) | 1-7 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 2 October, 1998 (02. 10. 98) | 13 October, 1998 (13. 10. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)